# EUROPEAN PATENT APPLICATION

(11) **EP 4 819 371 A1**
(43) Date of publication of application: **07.10.2026**
(21) Application number: 26163264.0
(22) Date of filing: 09.03.2026
(51) Int. Cl.: H01M 50/586, H01M 50/536, H01M 50/595

(54) **ELECTRODE ASSEMBLY AND RECHARGEABLE BATTERY INCLUDING THE ELECTRODE ASSEMBLY**

(30) Priority: 31.03.2025 KR 20250041215
(71) Applicant: SAMSUNG SDI CO., LTD., Yongin-si, Gyeonggi-do 17084 (KR)
(72) Inventor: JANG, Tae Woong, 16678 Suwon-si, Gyeonggi-do (KR)
(74) Representative: Bardehle Pagenberg Partnerschaft mbB Patentanwälte Rechtsanwälte

(57) **Abstract**

Aspects herein relate to an electrode assembly (400) and a battery (2) comprising an electrode assembly (400). The electrode assembly (400) includes an electrode (410) having two coated portions that each include an active material layer (414) formed on a substrate (412), with the coated portions being spaced apart from each other by a first distance in a length direction of the electrode (410). A pair of stress buffering layers (430) are disposed on the substrate (412) between the two coated portions and spaced apart from each other in the length direction of the electrode (410) by a second distance that is less than the first distance. An electrode tab (420) is joined to the substrate (412) between the pair of stress buffering layers (430) such that edge portions (422a) on opposite sides of the electrode tab (420) are each positioned on one of the stress buffering layers (430).

## Description

### BACKGROUND

### 1. Technical Field

Aspects herein relate to an electrode assembly and a battery including the electrode assembly.

### 2. Description of the Related Art

Unlike a primary battery that cannot be recharged, a rechargeable battery is a battery can be recharged. Low-capacity rechargeable batteries (hereinafter also simply referred to as a "battery") may be used for portable small-sized electronic devices, such as smartphones, feature phones, notebook computers, digital cameras, and camcorders. High-capacity batteries are widely used as a power source for driving a motor and a power storage battery in hybrid vehicles or electric vehicles. Such batteries include an electrode assembly that includes positive electrode and/or a negative electrode, a case that accommodates the electrode assembly, electrode terminals connected to the electrode assembly, and the like.

As technology advances, more high-capacity batteries are required. Accordingly, while the capacity of an individual battery may be increased, a plurality of batteries may be electrically connected and used to provide a higher capacity. For example, the batteries may be formed as a battery module including a plurality of batteries, and/or a battery pack including a plurality of battery modules. Such battery modules and battery packs may be used in systems that require high power and/or high capacity such as electric vehicles or the like.

As a battery is repeatedly charged and discharged, an active material layer, which serves as a reaction region, expands and contracts. In addition, as cell capacities of batteries increase, the amount of expansion of the active material layer also inevitably increases. The repeated expansion and contraction may cause various stability issues inside and outside the battery. In particular, at a junction between a substrate adjacent to the active material layer and an electrode tab, increased stress caused by the repeated expansion and contraction may induce or propagate cracks in the substrate, leading to an increase in leakage current, an open circuit, a short circuit, or the like.

The information disclosed in this section is intended to provide an understanding of the background of the present disclosure and may include information that does not constitute prior art.

### SUMMARY

Aspects herein are directed to an electrode assembly and a battery having improved structural stability at a junction between a substrate and an electrode tab even after repeated expansion and contraction of an active material layer caused by repeated charging and discharging of the battery.

However, the problems to be solved by the present disclosure are not limited to the above-mentioned problems, and other problems solved by the present disclosure not mentioned herein will be clearly understood by those skilled in the art from the following description.

A first aspect relates to an electrode assembly including an electrode including a coated portion where an active material layer is provided on a substrate, and an uncoated portion where the active material layer is not provided on the substrate of the electrode, an electrode tab joined to the substrate at the uncoated portion, and a stress buffering layer interposed between the substrate and an edge portion of the electrode tab.

In some examples, a portion of the stress buffering layer may be interposed between the substrate and the edge portion of the electrode tab.

In addition, or alternatively, the stress buffering layer may include an adhesive layer, a polymer layer having an adhesive layer, or a double-sided tape.

In addition, or alternatively, the stress buffering layer may have a thickness of 15 µm to 30 µm.

In addition, or alternatively, the electrode assembly may further include a protective tape that covers at least an upper surface of the electrode tab. In addition, or alternatively, a portion of the stress buffering layer may be interposed between the substrate and the edge portion of the electrode tab, and the protective tape may cover a portion of an upper surface of the stress buffering layer that is not covered by the electrode tab.

In addition, or alternatively, the coated portion may be provided on opposite sides of the uncoated portion, and the edge portion of the electrode tab may include a portion located at a side of the electrode tab facing the coated portion.

A second aspect relates to an electrode assembly including an electrode including two coated portions, each of the two coated portions including an active material layer formed on a substrate of the electrode, the two coated portions being spaced apart from each other by a first distance in a length direction of the electrode, a pair of stress buffering layers disposed on the substrate between the two coated portions and spaced apart from each other in the length direction of the electrode by a second distance that is less than the first distance, and an electrode tab joined to the substrate between the pair of stress buffering layers such that edge portions on opposite sides of the electrode tab are each positioned on one of the pair of stress buffering layers.

In some examples, a side portion of the electrode tab may be joined to the substrate and extend in a width direction of the electrode, and a length of each of the pair of stress buffering layers in the width direction of the electrode may be greater than a length of the side portion in the width direction of the electrode.

In addition, or alternatively, the length of each of the pair of stress buffering layers in the width direction of the electrode may be less than or equal to a length of the electrode in the width direction.

In addition, or alternatively, each of the stress buffering layers may include a portion interposed between the substrate and one of the edge portions of the electrode tab.

A third aspect relates to an electrode including a battery including a case and an electrode assembly accommodated in the case, the electrode assembly including a first electrode, a second electrode, and a separator between the first electrode and the second electrode, wherein the first electrode and the second electrode may each include a coated portion where an active material layer is provided on a substrate and an uncoated portion where the active material layer is not provided on the substrate, and the electrode assembly may further include an electrode tab joined to the substrate at the uncoated portion, and a stress buffering layer interposed between the substrate and an edge portion of the electrode tab.

### BRIEF DESCRIPTION OF THE DRAWINGS

The drawings illustrate exemplary embodiments of the present disclosure, and the teaching of the present disclosure will be more clearly understood from the accompanying drawings together with the following description. But the drawings should not be construed as limiting the scope of the present disclosure.
FIG. 1 is a perspective view of a battery pack including a plurality of batteries;
FIG. 2 is a perspective view of a battery according to one embodiment of the present disclosure;
FIG. 3 is a cross-sectional view of the battery shown in FIG. 2;
FIG. 4 is a plan view of a junction between an electrode and an electrode tab in an electrode assembly according to one embodiment of the present disclosure;
FIG. 5 is a cross-sectional view taken along line V-V of FIG. 4; and
FIGS. 6A to 6C illustrate a method of manufacturing the electrode assembly according to an embodiment of the present disclosure.

### DETAILED DESCRIPTION

Hereinafter, exemplary embodiments of the present disclosure will be described in detail with reference to the accompanying drawings. The terms or words used in the present specification and claims should not be construed as being limited to ordinary or dictionary meanings and should be construed as meanings and concepts consistent with the technical teaching of the present disclosure based on the principle that an inventor can appropriately define concepts of terms to explain the invention of the inventor in the best way. Therefore, the embodiments described herein and the configuration illustrated in the drawings are only the most preferred some embodiments and are not representative of the full the technical teaching of the present disclosure. It should be understood that various equivalents and modifications may be made at the time of filing the present application. Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof. Further, the use of "may" when describing embodiments of the present disclosure may include one or more embodiments of the present disclosure.

To help understand the disclosure, the drawings may be illustrated to actual scale. Rather, sizes of some components may be exaggerated. In addition, the same reference numerals may be assigned to the same components in different embodiments.

The description that two objects for comparison are "the same" as each other may denote that they are "substantially the same" as each other. Thus, the range of the expression "substantially the same" may include a case of having a deviation considered as a low degree, for example, a deviation within 5%. In addition, the description that a certain parameter is the same in a certain region may denote that the parameter is the same from an average perspective.

Terms including ordinals such as first and second may be used to describe various components, but, of course, the components are not limited by the terms. These terms are merely used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

Further, it should be noted that when one component is described as being "connected," "coupled," or "joined" to another component, still another component may be "connected," "coupled," or "joined" between the two components, even though the component may be directly "connected," "coupled," or "joined" to the other component. In addition, when a part is referred to as being "electrically connected" to other parts, the part may be directly connected to the other parts or may be connected to the other parts with other devices therebetween.

Unless otherwise specifically stated, throughout the specification, the expression "A and/or B" means A, B, or A and B. That is, "and/or" may include all combinations or arbitrary combinations of a plurality of listed items. "C to D" may denote C or greater to D or less, unless particularly otherwise described.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, and the like may be used herein to describe various elements, components, regions, layers, and/or sections, these elements, components, regions, layers, and/or sections should not be limited by these terms. These terms are used to distinguish one element, component, region, drawing layer, or cross section from another element, component, region, drawing layer, or cross section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the figures. For example, when the device in the drawing is turned over, elements described as "below" or "beneath" other elements would then be oriented "above" or "over" the other elements. Thus, the term "below" may encompass both an orientation of above and below.

The terms used in the present specification are intended to describe embodiments of the present disclosure and are not intended to limit the present disclosure.

Hereinafter, an electrode, an electrode assembly including the electrode, and a battery including the electrode assembly according to various embodiments of the present disclosure will be described with reference to the drawings. In this process, the thicknesses of lines or the sizes of components illustrated in the drawings may be exaggerated for clarity and convenience of description. In addition, terms to be described below have been defined by taking into consideration their functions in the present disclosure, and may be changed depending on a user or operator's intention or practice. Accordingly, such terms should be defined based on the overall contents of the present specification.

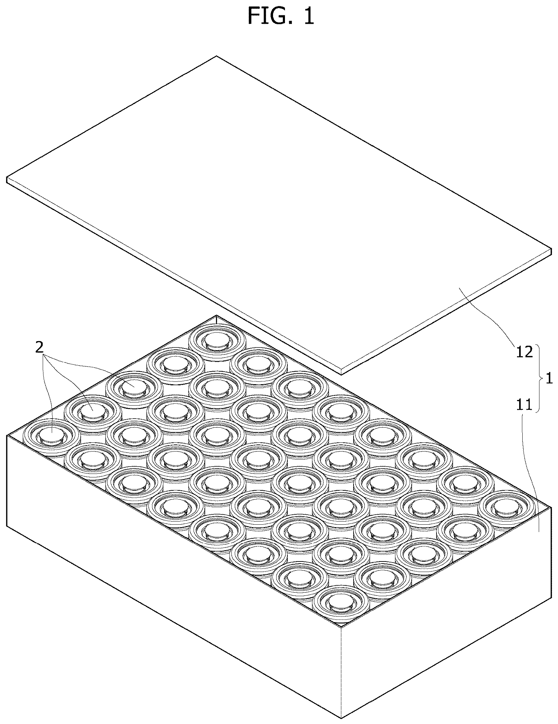

FIG. 1 is a perspective view of a battery pack including batteries according to one embodiment of the present disclosure. Referring to FIG. 1, the battery pack includes a housing 1 and a plurality of batteries 2.

The housing 1 forms an exterior of the battery pack and may provide a space in which the batteries 2 may be accommodated. The housing 1 may include a housing body 11 and a cover 12. The housing body 11 may be formed in a box shape with an open interior and an open side. A cross-sectional shape of the housing body 11 is not limited to the quadrangular shape shown in FIG. 1 and may be various other shapes such as another polygonal shape, a circular shape, and an elliptical shape.

The cover 12 may be coupled to the housing body 11 and may close an internal space of the housing body 11. As an example, the cover 12 may be formed as a substantially plate shape and may be disposed to face the open side of the housing body 11. The cover 12 may be fixed to the housing body 11 by various types of coupling methods such as bolting, welding, fitting, and the like.

The battery 2 may function as a unit structure that stores and supplies power in the battery pack. A plurality of batteries 2 may be provided. The plurality of batteries 2 may be disposed in the housing 1 in various patterns, such as a grid shape and a zigzag shape. The plurality of batteries 2 may be arranged side by side. The number of batteries 2 may be vary depending on the size, shape, or the like of the housing 1. A detailed configuration of each of the batteries 2 will be described below.

The batteries 2 may be electrically connected by bus bars (not shown). The plurality of batteries 2 may be connected in series or in parallel by the bus bars. As an example, the bus bars may connect the batteries 2 disposed in the same column in parallel and connect the batteries 2 disposed in two adjacent columns in series. The bus bar may be formed of an electrically conductive material such as copper, aluminum, or nickel.

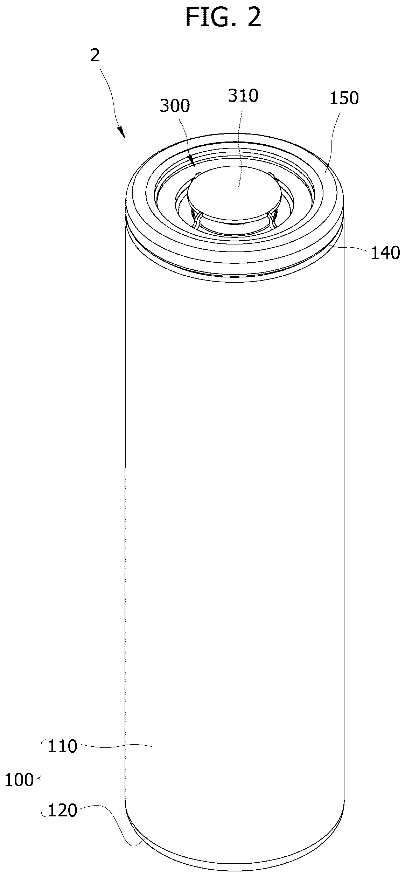

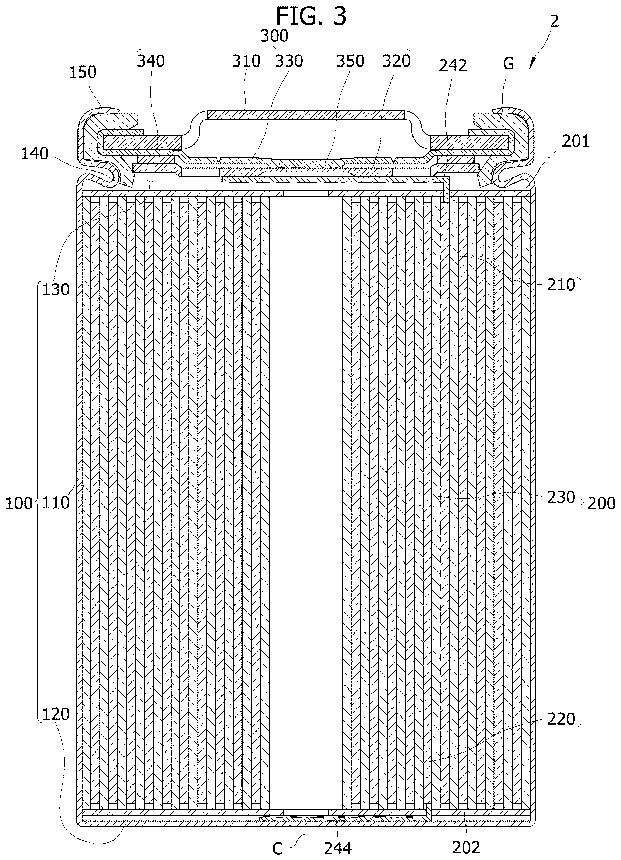

FIG. 2 is a perspective view of a configuration of the battery according to one embodiment of the present disclosure, and FIG. 3 is a cross-sectional view of the battery shown in FIG. 2. Referring to FIGS. 2 and 3, the battery 2 may include a case 100, an electrode assembly 200, and a cap assembly 300.

Hereinafter, a case in which the battery 2 is a lithium-ion rechargeable battery having a cylindrical shape will be described as an example. However, the present disclosure is not limited to the described configuration, and any battery 2 that includes an electrode having a configuration in which an electrode tab is joined to a substrate between active material layers may be within the scope of the present disclosure.

The case 100 may form an exterior of the battery 2. The case 100 can protect the electrode assembly 200 from external impact and perform a heat dissipation function to release heat generated during charging and discharging operations of the electrode assembly 200 to outside of the case 100. The case 100 may be provided to be electrically conductive. For example, the case 100 may be formed of at least one of steel, stainless steel, aluminum, and an aluminum alloy.

The case 100 may include a side wall part 110 in the shape of a cylinder with a central axis C extending in a central portion. The central axis C of the case 100 described below may refer to a central axis of the side wall part 110. Both end portions of the side wall part 110 perpendicular to the central axis C of the case 100 may be open.

The case 100 may further include a bottom part 120 that closes a lower end portion of the side wall part 110. The bottom part 120 may be a substantially disk shape and may face the lower end portion of the side wall part 110. The bottom part 120 may be disposed perpendicular to the central axis C of the case 100. A peripheral surface of the bottom part 120 may be coupled to the lower end portion of the side wall part 110. The bottom part 120 may be integrally formed with the side wall part 110 by a drawing process or the like, or the bottom part 120 may be made separate from the side wall part 110 and then coupled to the side wall part 110 by welding or the like.

The case 100 may further include an opening 130 at an upper end portion of the side wall part 110. The opening 130 may provide a path through which the electrode assembly 200 is inserted into the interior of the case 100 and forms a space in which the cap assembly 300 can be installed. The opening 130 may refer to an empty space surrounded by the upper end region of the side wall part 110, which is located at a side opposite to the bottom part 120.

The electrode assembly 200 may function as a unit structure for performing a power charging and discharging operation in the battery 2. The electrode assembly 200 may include a first electrode 210, a second electrode 220, and a separator 230 disposed between the first electrode 210 and the second electrode 220. The electrode assembly 200 may be inserted into the case 100 through the opening 130 of the case 100.

The electrode assembly 200 may have a shape that is wound around a winding axis. More specifically, the electrode assembly 200 may have a shape in which the first electrode 210, the separator 230, the second electrode 220, and the separator 230 are stacked and wound in a clockwise or counterclockwise direction around the winding axis. Thus, the electrode assembly 200 may have a shape similar to a jelly roll. A cross-sectional shape of the electrode assembly 200 may be various shapes such as an elliptical shape, a polygonal shape, or the like in addition to a circular shape. Here, the winding axis may be a straight line passing through a central portion of the electrode assembly 200. The winding axis of the electrode assembly 200 may be coaxial with the central axis C of the case 100.

The first electrode 210 may include a substrate having a rectangular shape in which one side is significantly longer than the other, with a first active material layer be provided on at least one region of the substrate. The substrate of the first electrode 210 may be a foil including a metal material such as aluminum or an aluminum alloy. The type, size, and shape of the substrate of the first electrode 210 are not particularly limited as long as the substrate of the first electrode 210 has conductivity and does not cause undesirable chemical changes in the rechargeable battery.

The first electrode 210 may function as a positive electrode of the electrode assembly 200. To this end, the first active material layer may be formed on at least a portion of the substrate of the first electrode 210. That is, the first electrode 210 may include a coated portion where the first active material layer is formed (or provided) on the substrate and an uncoated portion where the first active material layer is not provided. The first active material layer may be provided to both surfaces of the substrate of the first electrode 210, or alternatively, may be provided on only one surface of the substrate of the first electrode 210. As the first electrode 210 functions as a positive electrode, the first active material layer may include a positive electrode active material.

The positive electrode active material may include a compound (lithiated intercalation compound) capable of reversibly intercalating and deintercalating lithium. More specifically, the positive electrode active material may include one or more of composite oxides of lithium and a metal selected from cobalt, manganese, nickel, iron, and a combination thereof. As examples, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}MnzO₂, NCM). The positive electrode active material may include only one of LiFePO₄, LiMnFePO₄, and LiNiₓCo_{y}MnzO₂, and may also include two or all of LiFePO₄, LiMnFePO₄, and LiNiₓCo_{y}MnzO₂. In these formulas, 0<x<1, o<y<1, 0<z<1, and x+y+z=1.

The first active material layer may further include a positive electrode conductive material. The positive electrode conductive material is used to provide conductivity to the first active material layer, and any electrically conductive material that does not cause an undesirable chemical change in the battery may be used. Examples of the positive electrode conductive material include a carbon-based material such as natural graphite, artificial graphite, carbon black, acetylene black, Ketjen black, carbon fibers, carbon nanofibers, carbon nanotubes, and the like, a metal-based material in the form of a metal powder or metal fibers including copper, nickel, aluminum, silver, and the like, a conductive polymer such as a polyphenylene derivative, or a mixture thereof.

The first active material layer may further include a positive electrode binder. The positive electrode binder serves to adhere particles constituting the positive electrode active material to other well, and to adhere the positive electrode active material to the substrate of the first electrode 210. Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be used in combination. Na, K, or Li can be used as the alkali metal.

The dry binder is a polymer material capable of being fiberized. The dry binder may be, for example, polytetrafluoroethylene, polyvinylidene fluoride, a polyvinylidene fluoride-hexafluoropropylene copolymer, a polyethylene oxide, or a combination thereof.

The first electrode 210 may be electrically connected to the cap assembly 300. To this end, the electrode assembly 200 may include a first electrode tab 242 that electrically connects the first electrode 210 and the cap assembly 300. The first electrode tab 242 may include a conductive metal material such as copper, a copper alloy, nickel, or a nickel alloy. As the first electrode 210 functions as a positive electrode of the electrode assembly 200, the cap assembly 300 electrically connected to the first electrode 210 by the first electrode tab 242 may function as a positive electrode terminal of the battery 2.

A side portion of the first electrode tab 242 may be directly joined to the first electrode 210, and the remaining portion of the first electrode tab 242 may protrude upward from the first electrode 210. The remaining portion protruding from the first electrode 210 may be directly connected to the cap assembly 300.

Alternatively, a side portion of the first electrode tab 242 may be indirectly connected to the first electrode 210 via a current collector plate (not shown). When a side portion of the first electrode tab 242 is connected to the first electrode 210 via the current collector plate, the current collector plate may also be regarded as a portion of the first electrode tab 242. Typically, one side portion of the first electrode tab 242 may be connected to the uncoated portion of the first electrode 210, that is, to the substrate, by a joining method such as welding. A structure for connecting one side portion of the first electrode tab 242 to the uncoated portion of the first electrode 210 will be described in detail below.

The second electrode 220 may include a substrate having a rectangular shape in which one side is significantly longer than the other. A second active material layer may be formed on at least one region of the substrate. The second electrode 220 may be spaced apart from the first electrode 210 and face the first electrode 210. The second electrode 220 may function as a negative electrode of the electrode assembly 200. The substrate of the second electrode 220 may be formed of a foil including a metal material such as copper, a copper alloy, nickel, or a nickel alloy. The type, size, and shape of the substrate of the second electrode 220 are not particularly limited as long as the substrate of the second electrode 220 has conductivity and does not cause undesirable chemical changes in the battery.

The second active material layer may be formed on at least a portion of the substrate of the second electrode 220. That is, the second electrode 220 may include a coated portion where the second active material layer is formed (or provided) on the substrate and an uncoated portion where the second active material layer is not provided. The second active material layer may be provided on both surfaces of the substrate of the second electrode 220, or the second active material layer may be provided on only one surface of the substrate of the second electrode 220.

As the second electrode 220 functions as a negative electrode, the second active material layer may include a negative electrode active material. The negative electrode active material may be a material that reversibly intercalates/deintercalates lithium ions, a lithium metal, a lithium metal alloy, a material capable of doping and dedoping lithium, or a transition metal oxide.

The material capable of reversible intercalation/deintercalation of lithium ions may be a carbon-based negative electrode active material, and may include, for example, crystalline carbon, amorphous carbon, or a combination thereof. Examples of the crystalline carbon include graphite such as amorphous, plate-shaped, flaky, spherical, or fibrous natural graphite or artificial graphite. Examples of the amorphous carbon include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (x = 1 or 2), a Si-Q alloy, or a combination thereof. In the formula, Si-Q, where, Q is selected from an alkali metal, an alkaline-earth metal, a Group 13 element, a Group 14 element (excluding Si), a Group 15 element, a Group 16 element, a transition metal, a rare-earth element, and a combination thereof. The Sn-based negative electrode active material may include Sn, SnO₂, a Sn-based alloy, or a combination thereof.

The silicon-carbon composite may be a composite of silicon and amorphous carbon. In some embodiments, the silicon-carbon composite may be in the form of silicon particles with amorphous carbon coated on the surfaces of the silicon particles. The silicon-carbon composite may include secondary particles (core) in which silicon primary particles are agglomerated and an amorphous carbon coating layer (shell) located on the surfaces of the secondary particles. The amorphous carbon may also be provided between the silicon primary particles such that the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be mixed with a carbon-based negative electrode active material.

The second active material layer may further include a negative electrode conductive material and a negative electrode binder.

The negative electrode conductive material is used to impart conductivity to the second active material layer, and any electrically conductive material that does not cause an undesirable chemical change in the battery may be used. Examples of the negative electrode conductive material include a carbon-based material such as natural graphite, artificial graphite, carbon black, acetylene black, Ketjen black, carbon fibers, carbon nanofibers, carbon nanotubes, and the like, a metal-based material in the form of a metal powder or metal fibers including copper, nickel, aluminum, silver, and the like, a conductive polymer such as a polyphenylene derivative, or a mixture thereof.

The negative electrode binder serves to adhere particles constituting the negative electrode active material to other well and to adhere the negative electrode active material to the substrate of the second electrode 220.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode 220 may be electrically connected to the case 100. As such, the electrode assembly 200 may include a second electrode tab 244 electrically connecting the second electrode 220 and the case 100. The second electrode tab 244 may include a conductive metal material such as copper, a copper alloy, nickel, or a nickel alloy. As the second electrode 220 functions as a negative electrode of the electrode assembly 200, the case 100 electrically connected to the second electrode 220 by the second electrode tab 244 may function as a negative electrode terminal of the battery 2.

A side portion of the second electrode tab 244 may be directly joined to the second electrode 220, and the remaining portion may protrude downward from the second electrode 220. The remaining portion protruding from the second electrode 220 may be directly connected to the case 100.

In other embodiments, a side portion of the second electrode tab 244 may be indirectly connected to the second electrode 220 via a current collector plate (not shown). When one side portion of the second electrode tab 244 is connected to the second electrode 220 via the current collector plate, the current collector plate may also be regarded as a portion of the second electrode tab 244. Typically, one side portion of the second electrode tab 244 may be connected to the uncoated portion of the second electrode 220, that is, to the substrate, by a joining method such as welding. A structure for connecting one side portion of the second electrode tab 244 to the uncoated portion of the second electrode 220 will be described below.

The separator 230 may be disposed between the first electrode 210 and the second electrode 220. The separator 230 may function to prevent short-circuiting of the first electrode 210 and the second electrode 220 while allowing the movement of lithium ions between the first electrode 210 and the second electrode 220.

The separator 230 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination organic and inorganic materials provided on one surface or both surfaces of the porous substrate.

The porous substrate may be a polymer film formed of a polymer selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, and polytetrafluoroethylene (e.g., TEFLON^{®}), or a copolymer or mixture of two or more.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic and inorganic materials may be mixed in one coating layer. In other embodiments, a coating layer including organic materials and a coating layer including inorganic materials are stacked.

A pair of separators 230 may be provided. The pair of separators 230 may be disposed to face both surfaces of the first electrode 210 or the second electrode 220. The pair of separators 230 may be wound around the winding axis together with the first electrode 210 and the second electrode 220.

A first insulating plate 201 and a second insulating plate 202 may be disposed on upper and lower sides of the electrode assembly 200, respectively. The first insulating plate 201 and the second insulating plate 202 may each include insulating materials such as rubber, polyethylene (PE), polypropylene (PP), polyethylene terephthalate (PET), and the like.

The first insulating plate 201 may be disk shaped and disposed between the cap assembly 300 and an upper surface of the electrode assembly 200. Accordingly, the first insulating plate 201 may block the upper surface of the electrode assembly 200 from contacting the cap assembly 300 and insulate the electrode assembly 200 and the cap assembly 300 from each other. A through hole (not shown) through which the first electrode tab 242 extends may be formed in the first insulating plate 201.

The second insulating plate 202 may be disk shaped. The second insulating plate 202 may be disposed between a lower surface of the electrode assembly 200 and the bottom part 120 of the case 100. Accordingly, the second insulating plate 202 may block the lower surface of the electrode assembly 200 from contacting the bottom part 120 of the case 100 and insulate the electrode assembly 200 and the bottom part 120 of the case 100 from each other. A through hole (not shown) through which the second electrode tab 244 extends may be formed in the second insulating plate 202.

The cap assembly 300 may be coupled to the case 100 so as to seal the opening 130 of the case 100. For example, the cap assembly 300 may be disposed at the upper end portion of the side wall part 110, that is, at the opening 130. A beading part 140, which is concave toward the central axis C of the case 100, may be formed on the side wall part 110. The beading part 140 is disposed below the cap assembly 300 and may prevent the cap assembly 300 from being inserted into the case 100 beyond a set distance. A crimping part 150 may be formed by bending the upper end portion of the side wall part 110 toward the central axis C of the case 100, with the crimping part being formed on an upper side of the beading part 140. The crimping part 150 is disposed above the cap assembly 300 and may prevent the cap assembly 300 from being separated from the case 100.

A gasket G may be disposed between the case 100 and the cap assembly 300. The gasket G may function as a component that fixes a position of the cap assembly 300 in the opening 130 by its own elastic restoring force, electrically insulates the case 100 and the cap assembly 300 from each other, and blocks moisture or electrolyte from entering or exiting between the case 100 and the cap assembly 300.

The gasket G may include insulating materials such as rubber, polyethylene (PE), polypropylene (PP), polyethylene terephthalate (PET), and the like. The gasket G may be formed in a substantially ring shape and may be disposed on an inner side of the beading part 140 and/or the crimping part 150. An outer side surface of the gasket G may be in contact with an inner side surface of the beading part 140 and/or the crimping part 150. An inner side surface of the gasket G may be in contact with an outer side surface of the cap assembly 300.

The cap assembly 300 may be electrically connected to the first electrode 210 by the first electrode tab 242. As the first electrode 210 functions as the positive electrode of the electrode assembly 200, the cap assembly 300 may function as a positive electrode terminal of the rechargeable battery.

The cap assembly 300 may include an upper cap 310, a lower cap 320, a vent plate 330, an extension part 340, and a contact part 350.

The upper cap 310 forms the exterior of an upper-side of the cap assembly 300 and may be disposed in the opening 130. The upper cap 310 may be electrically connected to the first electrode 210 by the lower cap 320 and the vent plate 330, which will be described below.

The upper cap 310 may be disk shaped with a central portion that protrudes convexly upward. A central axis of the upper cap 310 may be coaxially aligned with the central axis C of the case 100. The central portion of the upper cap 310 may protrude to the outside of the case 100. An edge portion of the upper cap 310 may be disposed inside the case 100. A peripheral surface of the edge portion of the upper cap 310 may be spaced apart from the inner side surface of the gasket G by a predetermined distance. The upper cap 310 may be made of electrically conductive materials such as nickel, aluminum, copper, and the like.

The lower cap 320 faces the upper cap 310 and may be electrically connected to the electrode assembly 200. The lower cap 320 is disk shaped and may be disposed inside the case 100. The lower cap 320 may be disposed below the upper cap 310. That is, the lower cap 320 may be disposed between the upper cap 310 and the electrode assembly 200. A central axis of the lower cap 320 may be coaxial with the central axis C of the case 100. An upper surface of the lower cap 320 may be spaced apart from a lower surface of the upper cap 310.

An area of the lower cap 320 may be smaller than a cross-sectional area of the electrode assembly 200 perpendicular to the central axis C of the case 100. However, the area of the lower cap 320 is not limited in this regard, and the area of the lower cap 320 may be the same as the cross-sectional area of the electrode assembly 200 or may be greater than the cross-sectional area of the electrode assembly 200.

The lower cap 320 may be made of electrically conductive materials such as nickel, aluminum, copper, and the like. The lower cap 320 may be electrically connected to the electrode assembly 200. In examples, an end portion of the first electrode tab 242 extending from the first electrode 210 may be connected to a lower side surface of the lower cap 320 by various types of coupling methods such as welding. The lower cap 320 may be electrically connected to the upper cap 310 by the vent plate 330, which will be described below.

The vent plate 330 may be disposed between the upper cap 310 and the lower cap 320. The vent plate 330 may provide an electrical conduction path between the upper cap 310 and the lower cap 320 during normal operation of the battery 2. When an overcurrent occurs, the vent plate 330 may be deformed by a pressure of the gas generated inside the case 100 and may thereby cut off the electrical connection between the upper cap 310 and the lower cap 320.

The vent plate 330 may be disk shaped. The vent plate 330 may be disposed such that upper and lower surfaces of the vent plate 330 face the upper cap 310 and the lower cap 320, respectively. The lower surface of the vent plate 330 may be disposed to face the upper surface of the lower cap 320. A central axis of the vent plate 330 may be coaxial with the central axis C of the case 100. The vent plate 330 may be made of electrically conductive materials such as nickel, aluminum, copper, and the like.

The extension part 340 extends from the vent plate 330 and may be connected to the upper cap 310. The extension part 340 may support the vent plate 330 with respect to the upper cap 310 and provides an electrical connection between the upper cap 310 and the vent plate 330. The extension part 340 may be formed of the same material as the vent plate 330.

The contact part 350 may protrude from the vent plate 330 toward and contact the lower cap 320. The contact part 350 may electrically connect the vent plate 330 and the lower cap 320. Accordingly, a current generated from the first electrode 210 may be transmitted to the upper cap 310 sequentially through the first electrode tab 242, the lower cap 320, the contact part 350, the vent plate 330, and the extension part 340.

The contact part 350 according to the present embodiment may protrude downward from the lower surface of the vent plate 330. A lower surface of the contact part 350 may be in contact with the upper surface of the lower cap 320. A central axis of the contact part 350 may be coaxially aligned with the central axis C of the case 100 and the central axis of the vent plate 330. When the vent plate 330 is deformed due to an increase in an internal pressure of the case 100, the contact part 350 may be separated from the lower cap 320. Accordingly, when an overcurrent occurs, the electrical connection between the lower cap 320 and the vent plate 330 may be cut off.

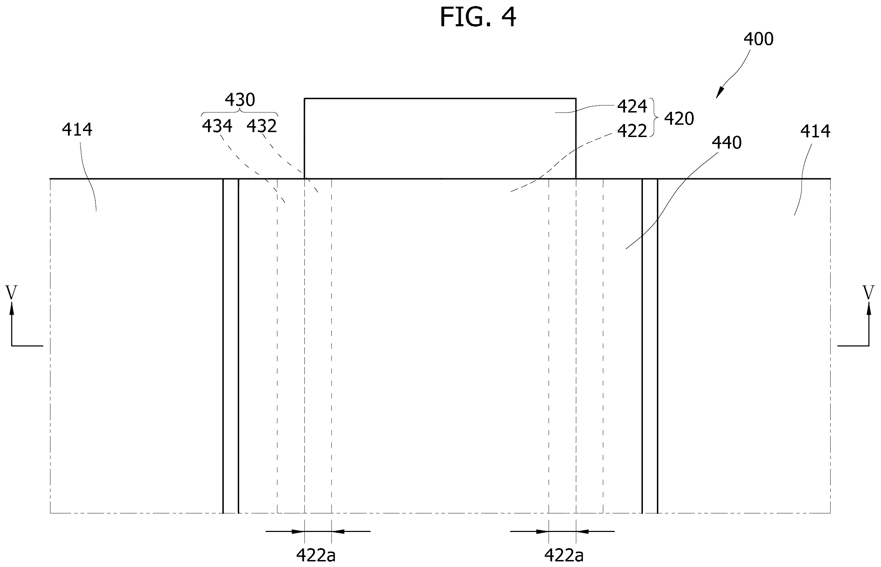

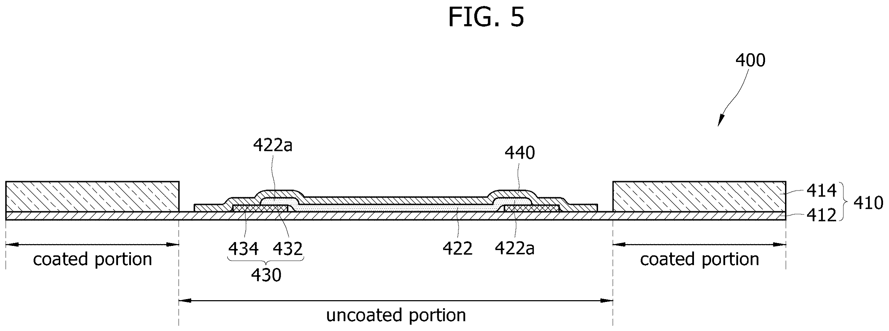

FIG. 4 is a plan view schematically illustrating a junction between an electrode and an electrode tab in an electrode assembly according to an embodiment of the present disclosure, and FIG. 5 is a cross-sectional view taken along line V-V of FIG. 4. Referring to FIGS. 4 and 5, an electrode assembly 400 includes an electrode 410, an electrode tab 420, and stress buffering layers 430. In addition, the electrode assembly 400 may further include a protective tape 440.

The electrode 410 may be a portion of a sheet-shaped electrode included in a jelly-roll type electrode assembly, that is, a sheet-shaped electrode having a length significantly greater than its width. The electrode 410 may be a portion of the positive electrode 210 or the negative electrode 220, as described above with reference to FIG. 3. Hereinafter, in the rectangular shaped electrode 410, a direction in which the length of the electrode 410 is relatively longer (shown as the horizontal direction in FIG. 4) is referred to as a "length direction" of the electrode 410 or a substrate 412, and a direction in which the length of the electrode 410 is relatively shorter (shown as the vertical direction in FIG. 4) is referred to as a "width direction" of the electrode 410 or the substrate 412.

The electrode 410 includes the substrate 412 and an active material layer 414. As shown in FIG. 5, the active material layer 414 may be formed on a surface of the substrate 412. In other embodiments, the active material layer 414 may be formed on opposite surfaces of the substrate 412. Portions of the electrode 410 where the active material layer 414 is provided on the substrate 412 are coated portions, and the remaining portion of the electrode 410where the active material layer 414 is not formed on the substrate 412 is as an uncoated portion.

In the length direction of the electrode 410, the coated portions may be spaced apart from each other by a predetermined distance (a first distance), that is, a length of the uncoated portion. That is, the uncoated portion may be a part of the substrate 412 where the active material layer 414 is not formed, and the uncoated portion may be located between two coated portions that are spaced apart by the predetermined distance. In other words, the uncoated portion is between the active material layers 414. In an embodiment, the coated portion may be provided on opposite sides of the uncoated portion. However, the present disclosure is not limited to such a configuration, and the coated portion may be provided on only one side of the uncoated portion.

The electrode tab 420 is connected to the electrode 410 and electrically connects the electrode 410 to outside of the electrode assembly 400. The electrode tab 420 may be the first electrode tab 242 or the second electrode tab 244 described above with reference to FIG. 3. The electrode tab 420 may be disposed on the uncoated portion of the electrode 410, that is, on the substrate 412. More specifically, one side of the electrode tab 420 may be disposed on the substrate 412 at the uncoated portion of the electrode 410. The other side of the electrode tab 420 may extend outward in the width direction of the electrode 410. Although not shown in the drawings, the other side of the electrode tab 420 may be connected to a terminal of a battery, such as a cap assembly or a case. The electrode tab 420 may be disposed on at least one of the surfaces of the substrate 412 constituting the uncoated portion.

The electrode tab 420 may be joined to the substrate 412by a method such as welding. Hereinafter, the side of the electrode tab 420 joined to the substrate 412 is referred to as a "first tab portion 422." The rest of the electrode tab 420, that is, the part extending from the first tab portion 422 to the outside of the electrode 410 and disposed outside the electrode 410 is referred to as a "second tab portion 424."

The electrode tab 420 extend in a direction different from a winding direction of the electrode 410, that is, extend in a direction that is different from the length direction of the electrode 410. For example, the electrode tab 420 may be disposed to extend in a direction forming an angle of 90 degrees with respect to the winding direction of the electrode 410, that is, in the width direction of the electrode 410. In such a configuration, the second tab portion 424 of the electrode tab 420 may disposed to extend upward or downward relative to the electrode 410. However, the present disclosure is not limited thereto, and the second tab portion 424 of the electrode tab 420 may be disposed at a predetermined angle, for example, an angle of 10 degrees to 90 degrees, with respect to the length direction of the electrode 410.

The stress buffering layers 430 may be interposed between respective edge portions 422a of the electrode tab 420 and the substrate 412. More specifically, the stress buffering layers 430 may be interposed between the respective edge portions 422a of the first tab portion 422 of the electrode tab 420 and the substrate 412. With this configuration, stress concentrated on the substrate 412, particularly at a boundary of the first tab portion 422 in the length direction of the electrode 410, , due to repeated expansion and contraction of the active material layer 414, may be absorbed and alleviated or dispersed.

In a conventional electrode assembly, the stress buffering layers are not provided between the substrate and the electrode tab. Thus, the electrode tab directly contacts and is joined to the substrate at the edge portions. During charging, the substrate in the uncoated portion is subjected to compressive stress due to the expansion of the active material layer. Further, during discharging, the substrate in the uncoated portion is subjected to tensile stress due to the contraction of the active material layer. As a result, as charging and discharging are repeated, the substrate 412 in the uncoated portion is repeatedly subjected to compressive and tensile stresses.

However, in the present disclosure with a structure in which the electrode tab 420 is joined to the substrate 412 at the uncoated portion, even when the active material layer 414 undergoes expansion and contraction, expansion and contraction of the substrate 412 is suppressed in the uncoated portion where the first tab portion 422 of the electrode tab 420 is joined. Instead, as the active material layer 414 repeatedly expands and contracts, most of the compressive stress and tensile stress are applied to the substrate 412 at the part of the uncoated portion where the first tab portion 422 is not joined.

In further detail generated stress in a conventional electrode assembly is concentrated on the portion of a substrate corresponding to the boundary of the electrode tab As a result, when the substrate at the boundary of the electrode tab reaches its elongation limit, damage, such as cracks, occurs. When the substrate is damaged, problems such as an increase in an internal resistance of the battery, generation of heat around the damaged substrate, and a decrease in battery capacity may occur, resulting in deterioration in the reliability of the battery.

Referring to FIGS. 4 and 5, in a structure where the electrode tab 420 extending in the width direction of the electrode 410 is joined to the uncoated portion located between the coated portions, damage to the substrate 412 due to stress concentration is more likely to occur at boundaries adjacent to the edge portions 422a among boundaries of the electrode tab 420. In an embodiment, the edge portion 422a of the electrode tab 420 may include a portion located at a side of the electrode tab 420 facing the coated portion. Here, the edge portions 422a refer to boundary portions of the electrode tab 420 in the length direction of the electrode 410, excluding boundary portions of the electrode tab 420 in the width direction of the electrode 410. This is because the edge portions 422a of the electrode tab 420 receive stresses resulting from the expansion and contraction of the active material layers 414 disposed on both sides of the electrode tab 420.

According to the embodiment of the present disclosure, the electrode assembly 400 includes the stress buffering layer 430 interposed between the edge portion 422a of the electrode tab 420 and the substrate 412. That is, the stress buffering layer 430 is disposed above the substrate 412 and below the electrode tab 420, specifically, below the edge portion 422a of the first tab portion 422. The stress buffering layer 430 disposed below the edge portion 422a of the electrode tab 420 can disperse or alleviate compressive stress and elongational stress concentrated on the substrate 412 at the boundary of the edge portion 422a. Accordingly, stress is contained in the substrate 412 near the edge portion 422a of the electrode tab 420, thereby preventing or suppressing damage such as cracks from occurring.

In order to alleviate and disperse stress, the stress buffering layer 430 may be formed of a material having high adhesion to the substrate 412. The material having high adhesion may include, for example, an adhesive material. More specifically, the stress buffering layer 430 may be (or include) an adhesive layer formed of an adhesive material, a polymer layer having an adhesive layer, or a double-sided tape.

A portion 432 of the stress buffering layer 430 may be interposed between the edge portion 422a of the electrode tab 420 and the substrate 412. A further portion 434 of the stress buffering layer 430 may be disposed on an outer side of the electrode tab 420. That is, the stress buffering layer 430 may have a size in the length direction of the electrode 410 such that only the edge portion 422a of the electrode tab 420 is disposed on the stress buffering layer 430. In addition, in the width direction of the electrode 410, the stress buffering layer 430 may have a length greater than or equal to that of the first tab portion 422. In an embodiment, the length of the stress buffering layer 430 in the width direction of the electrode 410 may be greater than a length of the side portion of the first tab portion 422 in the width direction of the electrode 410. In an embodiment, the length of the stress buffering layer 430 in the width direction of the electrode 410 may be less than or equal to a length of the electrode 410 in the width direction. Accordingly, since the edge portion 422a of the electrode tab 420, particularly a boundary line of the edge portion 422a, is located on the stress buffering layer 430, stress concentration at the portion of the substrate 412 corresponding to the boundary of the edge portion 422a can be effectively alleviated or dispersed, and the stress is blocked by the stress buffering layer 430 before being transferred to the electrode tab 420.

According to some embodiments of the present disclosure, the stress buffering layer 430 may have a thickness of about 15 µm to 30 µm. When the thickness of the stress buffering layer 430 is less than 15 µm, the concentrated stress may not be sufficiently alleviated or dispersed, thereby reducing the effect of stress relief. When the thickness of the stress buffering layer 430 exceeds 30 µm, a height difference between the edge portion 422a of the electrode tab 420 and the portion of the substrate 412 to which the electrode tab 420 is joined may increase, and thus, damage is more likely to occur at a bent portion of the electrode tab 420.

As shown in FIGS. 4 and 5, in a structure in which the electrode tab 420 extending in the width direction of the electrode 410 is joined to the uncoated portion located between the coated portions that are spaced apart, a pair of stress buffering layers 430 may be provided, with each stress buffering layer corresponding to one of the edge portions 422a located at both sides of the electrode tab 420. The pair of stress buffering layers 430 may be spaced apart from each other in the length direction of the electrode 410 by a second distance that is less than the distance between the coated portions, with the stress buffering layers 422a being disposed on the substrate 412 at the uncoated portion.

The second distance between the pair of stress buffering layers 430 may correspond to a size of the electrode tab 420 in the length direction of the electrode 410. Alternatively, the second distance may correspond to a distance between the edge portions 422a on both sides of the electrode tab 420 in the length direction of the electrode 410. In addition, the electrode tab 420 may be located such that both edge portions 422a are positioned on the pair of stress buffering layers 430. Accordingly, the stress buffering layer 430 can alleviate or disperse stress concentrated on the substrate 412 at the boundary of each of the edge portions 422a on both sides of the electrode tab 420.

The electrode assembly 400 may further include the protective tape 440 covering at least an upper surface of the electrode tab 420. By covering the electrode tab 420, the protective tape 440 can prevent the electrode tab 420 from directly contacting other structures when the electrode assembly is wound in a jelly-roll form. Thus, the protective tape 440 can prevent a short circuit from occurring inside the electrode assembly 400 due to the electrode tab 420. The protective tape 440 may be formed of an electrically insulating material, such as polypropylene, polyimide, or polyethylene terephthalate (PET).

According to an embodiment, the protective tape 440 may cover the upper surface of the electrode tab 420 and also an upper surface of the stress buffering layer 430, particularly a portion 434 of the upper surface of the stress buffering layer 430 that is not covered by the electrode tab 420. Accordingly, the protective tape 440 can prevent impurities such as ions contained in an electrolyte from adhering to the stress buffering layer 430 formed of an adhesive material.

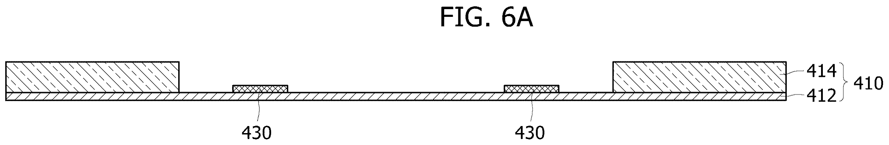

FIGS. 6A to 6C show a method of manufacturing the electrode assembly according to one embodiment of the present disclosure. The manufacturing method shown in FIGS. 6A to 6C may be performed to make the electrode assembly 400 illustrated in FIGS. 4 and 5.

Referring to FIG. 6A an electrode 410 is prepared in which coated portions, each having an active material layer 414 formed on a substrate 412, are spaced apart from each other by a first distance. A portion of the substrate 412 where the active material layer 414 is not provided is an uncoated portion. In addition, a pair of stress buffering layers 430 spaced apart by a second distance are formed on the substrate 412 on the uncoated portion. The second distance between the pair of stress buffering layers 430 is less than the first distance between the coated portions.

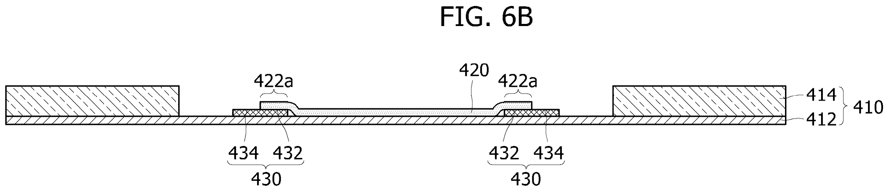

Referring to FIG. 6B, the electrode tab 420 is disposed on and joined to the substrate 412 on which the pair of stress buffering layers 430 are formed. The electrode tab 420 may be joined to the substrate 412 by a method such as welding. The electrode tab 420 may be disposed such that edge portions 422a on both sides of the electrode tab 420 are aligned with portions 432 of the pair of stress buffering layers 430 and then joined to the substrate 412. As a result, boundary lines adjacent to the edge portions 422a on both sides of the electrode tab 420 are aligned within the pair of stress buffering layers 430.

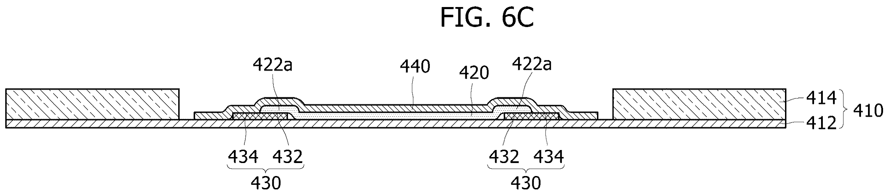

Referring to FIG. 6C, a protective tape 440 is attached to the substrate 412 on which the pair of stress buffering layers 430 are formed and the electrode tab 420 is joined. The protective tape 440 may cover the electrode tab 420 and also portions 434 of the pair of stress buffering layers 430 that are not covered by the electrode tab 420 and exposed upward.

According to the above-described embodiments of the present disclosure, stress concentrated at an edge portion of an electrode tab at a junction between a substrate and the electrode tab can be absorbed and dispersed by a separate stress buffering layer, thereby preventing damage to the substrate such as cracks or the like at the edge portion of the electrode tab.

It will be appreciated by persons skilled in the art that the effects that can be achieved through the present disclosure are not limited to what has been described above and other advantages of the present disclosure will be understood by those skilled in the art.

While the above disclosure has been described with reference to the exemplary embodiments illustrated in the drawings, the disclosure is not limited to the disclosed embodiments. Rather, the disclosure includes various modifications and equivalent arrangements. Furthermore, the present disclosure can also be applied in fields other than those described above.

### Further embodiments

### Embodiment 1:

An electrode assembly comprising:
an electrode including coated portions in which an active material layer is formed on a substrate of the electrode, and an uncoated portion in which the active material layer is not formed on the substrate;
an electrode tab joined to the substrate at the uncoated portion; and a stress buffering layer interposed between the substrate and an edge portion of the electrode tab.

### Embodiment 2:

The electrode assembly of Embodiment 1, wherein a portion of the stress buffering layer is interposed between the substrate and the edge portion of the electrode tab.

### Embodiment 3:

The electrode assembly of Embodiment 1, wherein the stress buffering layer includes an adhesive layer, a polymer layer having an adhesive layer, or a double-sided tape.

### Embodiment 4:

The electrode assembly of Embodiment 1, wherein the stress buffering layer has a thickness of 15 µm to 30 µm.

### Embodiment 5:

The electrode assembly of Embodiment 1, further comprising a protective tape that covers at least an upper surface of the electrode tab.

### Embodiment 6:

The electrode assembly of Embodiment 5, wherein a portion of the stress buffering layer is interposed between the substrate and the edge portion of the electrode tab, and the protective tape also covers a portion of an upper surface of a remaining portion of the stress buffering layer, excluding the portion of the stress buffering layer.

### Embodiment 7:

The electrode assembly of Embodiment 1, wherein the coated portions are respectively located on both sides of the uncoated portion, and
the edge portion of the electrode tab includes a portion located on a side of the electrode tab facing the coated portion.

### Embodiment 8:

An electrode assembly comprising:
an electrode including two coated portions, each of which has an active material layer formed on a substrate of the electrode and which are spaced apart from each other by a first distance in a length direction of the electrode;
a pair of stress buffering layers disposed on the substrate between the two coated portions and spaced apart from each other in the length direction of the electrode by a second distance smaller than the first distance; and
an electrode tab joined to the substrate between the pair of stress buffering layers, such that edge portions on both sides of the electrode tab are respectively located on the pair of stress buffering layers.

### Embodiment 9:

The electrode assembly of Embodiment 8, wherein one side portion of the electrode tab is joined to the substrate and extends in a width direction of the electrode, and
a length of each of the pair of stress buffering layers in the width direction of the electrode is greater than a length of the one side portion in the width direction of the electrode.

### Embodiment 10:

The electrode assembly of Embodiment 9, wherein the length of each of the pair of stress buffering layers in the width direction of the electrode is smaller than or equal to a length of the electrode in the width direction.

### Embodiment 11:

The electrode assembly of Embodiment 8, wherein each of the pair of stress buffering layers includes a portion interposed between the substrate and each of the edge portions of the electrode tab.

### Embodiment 12:

The electrode assembly of Embodiment 8, wherein each of the pair of stress buffering layers includes an adhesive layer, a polymer layer having an adhesive layer, or a double-sided tape.

### Embodiment 13:

The electrode assembly of Embodiment 8, wherein each of the pair of stress buffering layers has a thickness of 15 µm to 30 µm.

### Embodiment 14:

The electrode assembly of Embodiment 8, further comprising a protective tape that covers at least an upper surface of the electrode tab.

### Embodiment 15:

The electrode assembly of Embodiment 14, wherein each of the pair of stress buffering layers includes a portion interposed between the substrate and each of the edge portions of the electrode tab, and
the protective tape also covers an upper surface of a remaining portion of each of the stress buffering layers, excluding the portion of the stress buffering layer.

### Embodiment 16:

A battery comprising:
an electrode assembly in which a separator is interposed between a first electrode and a second electrode; and
a case accommodating the electrode assembly,
wherein the first electrode and the second electrode each include a coated portion in which an active material layer is formed on a substrate and an uncoated portion in which the active material layer is not formed on the substrate, and
the electrode assembly includes:
   an electrode tab joined to the substrate at the uncoated portion; and
   a stress buffering layer interposed between the substrate and an edge portion of the electrode tab.

### Embodiment 17:

The battery of Embodiment 16, wherein a portion of the stress buffering layer is interposed between the substrate and the edge portion of the electrode tab.

### Embodiment 18:

The battery of Embodiment 16, wherein the stress buffering layer includes an adhesive layer, a polymer layer having an adhesive layer, or a double-sided tape.

### Embodiment 19:

The battery of Embodiment 16, further comprising a protective tape that covers at least an upper surface of the electrode tab.

### Embodiment 20:

The battery of Embodiment 19, wherein a portion of the stress buffering layer is interposed between the substrate and the edge portion of the electrode tab, and the protective tape also covers an upper surface of a remaining portion of the stress buffering layer, excluding the portion the stress buffering layer.

## Claims

1. An electrode assembly (400) comprising:
an electrode (410) including a coated portion where an active material layer (414) is provided on a substrate (412) of the electrode (410) and an uncoated portion where the active material layer (414) is not provided on the substrate (412);
an electrode tab (420) joined to the substrate (412) at the uncoated portion; and
a stress buffering layer (430) interposed between the substrate (412) and an edge portion (422a) of the electrode tab (420).

2. The electrode assembly (400) according to claim 1, wherein:
a portion of the stress buffering layer (430) is interposed between the substrate (412) and the edge portion (422a) of the electrode tab (420); and/or
the stress buffering layer (430) includes an adhesive layer, a polymer layer having an adhesive layer, or a double-sided tape; and/or the stress buffering layer (430) has a thickness of 15 µm to 30 µm.

3. The electrode assembly (400) according to claim 1 or 2, further comprising a protective tape (440) that covers at least an upper surface of the electrode tab (420).

4. The electrode assembly (400) according to claim 3, wherein a portion of the stress buffering layer (430) is interposed between the substrate (412) and the edge portion (422a) of the electrode tab (420), and wherein the protective tape (440) covers an upper surface of the stress buffering layer (430) that is not covered by the electrode tab (420).

5. The electrode assembly (400) according to one of claims 1 to 4, wherein the coated portion is provided on opposite sides of the uncoated portion, and wherein the edge portion (422a) of the electrode tab (420) includes a portion located at a side of the electrode tab (420) facing the coated portion.

6. An electrode assembly (400) comprising:
an electrode (410) including two coated portions, each of the two coated portions including an active material layer (414) formed on a substrate (412) of the electrode (410), the two coated portions being spaced apart from each other by a first distance in a length direction of the electrode (410);
a pair of stress buffering layers (430) disposed on the substrate (412) between the two coated portions and spaced apart from each other in the length direction of the electrode (410) by a second distance that is less than the first distance; and
an electrode tab (420) joined to the substrate (412) between the pair of stress buffering layers (430) such that edge portions (422a) on opposite sides of the electrode tab (420) are each positioned on one of the pair of stress buffering layers (430).

7. The electrode assembly (400) according to claim 6, wherein a side portion of the electrode tab (420) is joined to the substrate (412) and extends in a width direction of the electrode (410), and a length of each of the pair of stress buffering layers (430) in the width direction of the electrode (410) is greater than a length of the side portion in the width direction of the electrode (410).

8. The electrode assembly (400) according to claim 7, wherein the length of each of the pair of stress buffering layers (430) in the width direction of the electrode (410) is less than or equal to a length of the electrode (410) in the width direction.

9. The electrode assembly (400) according to one of claims 6 to 8, wherein:
each of the pair of stress buffering layers (430) includes a portion interposed between the substrate (412) and one of the edge portions (422a) of the electrode tab (420); and/or
each of the pair of stress buffering layers (430) includes an adhesive layer, a polymer layer having an adhesive layer, or a double-sided tape; and/or
each of the stress buffering layers (430) has a thickness of 15 µm to 30 µm.

10. The electrode assembly (400) according to one of claims 6 to 9, further comprising a protective tape (440) that covers at least an upper surface of the electrode tab (420).

11. The electrode assembly (400) according to claim 10, wherein each of the pair of stress buffering layers (430) includes a portion interposed between the substrate (412) and one of the edge portions (422a) of the electrode tab (420), and wherein the protective tape (440) covers an upper surface each of the stress buffering layers (430) that is not covered by the electrode tab (420).

12. A battery (2) comprising:
a case (100); and
an electrode assembly (200) accommodated in the case (100), the electrode assembly (200) including a first electrode (210), a second electrode (220), and a separator (230) between the first electrode (210) and the second electrode (220);
wherein the first electrode (210) and the second electrode (220) each include a coated portion where an active material layer is provided on a substrate and an uncoated portion where the active material layer is not provided on the substrate, and
wherein the electrode assembly (200) further includes:
an electrode tab (242, 244) joined to the substrate at the uncoated portion; and
a stress buffering layer interposed between the substrate and an edge portion of the electrode tab (242, 244).

13. The battery (2) according to claim 12, wherein:
a portion of the stress buffering layer is interposed between the substrate and the edge portion of the electrode tab (242, 244); and/or
the stress buffering layer includes an adhesive layer, a polymer layer having an adhesive layer, or a double-sided tape.

14. The battery (2) according to claim 12 or 13, further comprising a protective tape that covers at least an upper surface of the electrode tab (242, 244).

15. The battery (2) according to claim 14, wherein a portion of the stress buffering layer is interposed between the substrate and the edge portion of the electrode tab (242, 244), and wherein the protective tape covers an upper surface of the stress buffering layer that is not covered by the electrode tab (242, 244).
